# EUROPÄISCHE PATENTANMELDUNG

(11) **EP 1 291 229 A2**
(43) Veröffentlichungstag der Anmeldung: **12.03.2003**
(21) Anmeldenummer: 02013134.8
(22) Anmeldetag: 14.06.2002
(51) Int. Cl.: B60K 35/00, G06F 3/033

(54) **Anzeige- und Eingabevorrichtung**

(30) Priorität: 28.08.2001 DE 10142031
(71) Anmelder: ROBERT BOSCH GMBH, 70442 Stuttgart (DE)
(72) Erfinder: Uhl, Heribert, 71263 Weil Der Stadt (DE)

(57) **Zusammenfassung**

Es wird eine Anzeige- und Eingabevorrichtung vorgeschlagen, bei der eine berührungsempfindliche Anzeigefläche durch auf der Anzeigefläche angeordnete Stege in verschiedene Bereiche getrennt ist, wobei durch eine Berührung der verschiedenen Bereiche jeweils unterschiedliche Eingaben möglich sind. Die Abtrennung dient einer einfachen Abgrenzung verschiedener Bereichen einer berührungsempfindlichen Touchscreenoberfläche.

## Beschreibung

### Stand der Technik

Die Erfindung geht aus von einer Anzeige- und Eingabevorrichtung nach der Gattung des Hauptanspruchs. Aus der DE 36 28 333 A1 ist bereits eine Multifunktionsanzeige für Kraftfahrzeuge bekannt, bei der auf einer Anzeigefläche mehrere Funktionen nach Betätigen eines zugehörigen Funktionsschalters darstellbar sind. Die Funktionsschalter sind am Rand einer Anzeige angeordnet und vorzugsweise als Drucktasten ausgeführt. Für die mechanischen Tasten neben der Anzeige ist zusätzlicher Bauraum und Montageaufwand erforderlich. Außerdem sind die Tasten bezüglich ihres Erscheinungsbildes während der Benutzung festgelegt, so dass besondere Funktionen der Tasten in der Anzeige dargestellt werden müssen. Ferner sind sogenannte Touchscreenbildschirme bekannt, bei denen einem Benutzer in einer Anzeigefläche Funktionen dargestellt werden. Die Oberfläche der Anzeige ist berührungsempfindlich ausgeführt, so dass eine Berührung der Anzeigefläche, z.B. durch eine auf die Anzeigefläche aufgelegte druckempfindliche Schicht, erfasst und über eine Auswerteeinheit elektronisch auswertbar ist. Da die Anzeigefläche als eine ebene Fläche ausgeführt ist, kann gegenüber der Betätigung einer Taste jedoch keine haptische Rückkopplung an einen Benutzer erfolgen, da sich für ihn die gesamte Anzeigefläche gleich anfühlt. Aus der EP 813 328 A2 ist eine Touchscreentastatur bekannt, bei der auf eine berührungsempfindliche Anzeigefläche eine Schaltmatte mit einer Vielzahl mechanischer Tasten aufgelegt wird. Mit einer Betätigung einer Taste wird auf einen unter der Taste befindlichen, berührungsempfindlichen Bereich der Anzeigefläche Druck ausgeübt. Hierfür ist eine aufwendige Konstruktion für die Anordnung der Tasten erforderlich.

### Vorteile der Erfindung

Die erfindungsgemäße Anzeige- und Eingabevorrichtung mit den Merkmalen des Hauptanspruchs hat demgegenüber den Vorteil, dass berührungsempfindliche Bereiche der Anzeigefläche durch Stege abgetrennt sind. Hierdurch wird es für einen Benutzer erleichtert, den von ihm gewünschten Bereich der Anzeigefläche tatsächlich zu berühren, indem er durch den auf der Anzeigefläche angeordneten Steg zu dem gewünschten Bereich geführt wird. Hierbei kann auf zusätzliche, neben der Anzeige anzuordnende mechanische Tasten verzichtet werden, ohne auf eine Betätigung gut zu erfühlender, einzelner Felder verzichten zu müssen. Eine zusätzliche Anordnung von mechanischen Tasten über der berührungsempfindlichen Anzeigefläche ist ebenfalls nicht mehr erforderlich. Vielmehr kann eine berührungsempfindliche Anzeigefläche ohne weitere Bearbeitung zur Eingabe verwendet werden.

Durch die in den Unteransprüchen aufgeführten Maßnahmen sind vorteilhafte Weiterbildungen und Verbesserungen der im Hauptanspruch angegebenen Anzeige- und Eingabevorrichtung möglich. Besonderes vorteilhaft ist, dass die Anzeige in den durch den Steg getrennten Bereichen jeweils abhängig von einer auswählbaren Funktion oder z.B. von den Lichtverhältnissen gewählt werden kann. Gegenüber einem herkömmlichen Bildschirm mit berührungsempfindlichen Flächen kann die Größe des Bildschirms verringert oder die Funktionsdichte erhöht werden, da Trennflächen auf der Anzeige, die zur Trennung von Eingabebereichen dienen, um eindeutige Eingabemöglichkeiten zu gewährleisten, verringert werden können.

Besonders vorteilhaft ist, durch den Steg Tastenfelder auf der Anzeigefläche abzuteilen, so dass eine eindeutige Zuordnung zwischen einem Tastenfeld und der Funktion dieses Tastenfelds möglich ist.

Weiterhin ist vorteilhaft, eine Funktion anzuzeigen, die mit einer Berührung der Anzeigefläche in einem zugeordneten Bereich der Anzeigefläche aufrufbar ist, so dass sich ein Benutzer unmittelbar über die aufrufbare Funktion informieren kann.

Weiterhin ist vorteilhaft, nur einen Teil der Anzeigefläche berührungsempfindlich auszuführen, so dass zwischen einem Bereich, der alleine der Anzeige dient, und einem Bedienbereich getrennt werden kann.

Weiterhin ist vorteilhaft, in dem durch den Steg abgedeckten Bereich eine Berührung der Anzeigefläche nicht zu erfassen. Hierdurch wird vermieden, dass ein auf den Steg versehentlich oder zu stark ausgeübter Druck zu einer unerwünschten Eingabe führt.

Weiterhin ist vorteilhaft, den Steg an ein Gehäuse der Anzeige- und Eingabevorrichtung anzuformen und vorzugsweise einstückig mit dem Gehäuse auszuführen. Das Gehäuse kann auch eine Frontabdeckung der Anzeige- und Eingabevorrichtung sein, wenn diese in eine Tafel eingebaut wird. Hierdurch ist ein flexibles Anpassen der Stege an das mit der Anzeige- und Eingabevorrichtung zu bedienende Gerät möglich.

Weiterhin ist vorteilhaft, eine Abdeckung der Anzeigefläche mit Stegen auswechselbar an der Anzeigefläche anzuordnen, um einem Benutzer eine Anpassung an verschiedene Verwendungsmöglichkeiten eines Gerätes zu erlauben und auch einen Einbau in verschiedene Gerätevarianten zu ermöglichen.

Insbesondere ist die Verwendung einer erfindungsgemäßen Anzeige- und Eingabevorrichtung in einem Kraftfahrzeug vorteilhaft, vorzugsweise zur Bedienung einer Fahrerinformationsvorrichtung, da in einem Fahrzeug der Fahrer sich insbesondere auf die Fahrt konzentrieren muss und daher im allgemeinen keinen ständigen Augenkontakt zu einer zu bedienenden Fahrerinformationsvorrichtung halten kann. Durch die Stege wird ihm eine fühlbare Rückkopplung gegeben, so dass auch eine Bedienung ohne direkten, ständigen Augenkontakt während des Bedienvorgangs möglich ist.

### Zeichnung

Ausführungsbeispiele der Erfindung sind in der Zeichnung dargestellt und in der nachfolgenden Beschreibung näher erläutert. Es zeigen Figur 1 eine erfindungsgemäße Anzeige- und Eingabevorrichtung zur Steuerung einer Fahrerinformationsvorrichtung in einem Kraftfahrzeug, Figur 2 eine Frontansicht auf eine erfindungsgemäße Anzeige- und Eingabevorrichtung, Figur 3 eine Seitenansicht eines Schnitts durch eine erfindungsgemäße Anzeige- und Eingabevorrichtung.

### Beschreibung des Ausführungsbeispiels

Die erfindungsgemäße Anzeige- und Eingabevorrichtung kann zur Steuerung einer Vielzahl elektrischer Geräte eingesetzt werden. Insbesondere ist ihre Verwendung für Geräte vorteilhaft, bei denen für die Anordnung einer Steuerung nur ein geringer Bauraum zur Verfügung steht, vor allem dann, wenn kein ständiger Blickkontakt eines Benutzers zu der Anzeige- und Eingabevorrichtung gewährleistet ist. Dies ist im allgemeinen in Fahrzeugen der Fall, bei deren Führung sich ein Fahrer auf das Verkehrsgeschehen konzentrieren muss. Im Folgenden ist die Verwendung einer erfindungsgemäßen Anzeige- und Eingabevorrichtung anhand der Verwendung zur Bedienung einer Fahrerinformationsvorrichtung in einem Kraftfahrzeug erläutert.

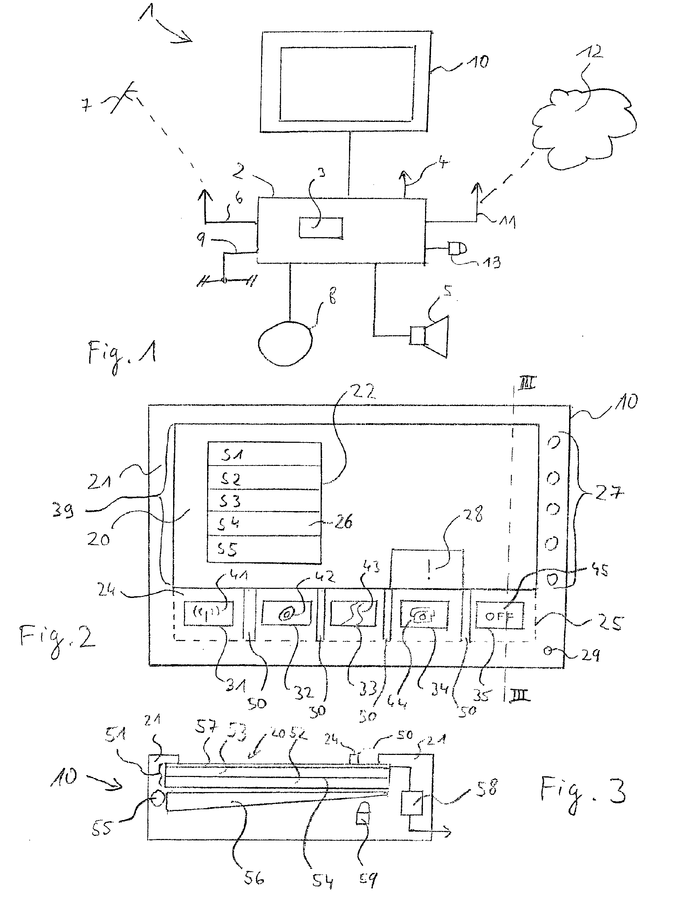

In der Figur 1 ist eine Fahrerinformationsvorrichtung 1 dargestellt, bei der an eine Zentraleinheit 2 eine Anzeige- und Eingabevorrichtung 10 angeschlossen ist. Die Anzeige- und Eingabevorrichtung 10 ist vorzugsweise an einer Mittelkonsole des Fahrzeugs oder an der Instrumententafel des Fahrzeugs für den Fahrer gut zugänglich angeordnet. Die Zentraleinheit 2 weist eine Recheneinheit 3 auf, die zur Steuerung der Anzeige- und Eingabevorrichtung 10 dient. Über die Anzeige- und Eingabevorrichtung 10 vorgenommene Eingaben werden von der Recheneinheit 3 verarbeitet. Die Fahrerinformationsvorrichtung 1 beinhaltet eine Radioempfangsvorrichtung, eine Fahrzeugnavigationsvorrichtung, eine Musikwiedergabevorrichtung, einen Bordcomputer, eine Fernsehvorrichtung, einen Internetzugang und/oder eine Telefonvorrichtung. Über eine erste Antenne 4 wird ein Radioprogramm eines Rundfunksenders empfangen und an einen Lautsprecher 5 ausgegeben. Über eine zweite Antenne 6 wird ein Funkkontakt zu einem Satelliten 7 eines Ortungssystems erstellt und über das Ortungssystem eine Fahrzeugposition ermittelt. Durch Zugriff auf einen in einem Datenträgerlaufwerk 8 abgelegten Datenträger mit einer digitalen Straßenkarte wird eine Fahrtroute von der aktuellen Fahrzeugposition zu einem über die Anzeige- und Eingabevorrichtung 10 eingegebenen Fahrziel ermittelt. Über einen Datenbus 9 sind Fahrzeugdaten von Fahrzeugsensoren abrufbar, die in Figur 1 nicht dargestellt sind, und in der Anzeige- und Eingabevorrichtung 10 darstellbar. Ferner sind über den Datenbus 9 über die Anzeige- und Eingabevorrichtung 10 auch Fahrzeugfunktionen steuerbar. Über eine dritte Antenne 11 ist eine Funkverbindung zu einem Mobilfunktelefonnetz 12 erstellbar. Ein Mikrofon 13 und der Lautsprecher 5 dienen als Ein- und Ausgabeelemente eines Telefons, mit dem eine Telefonverbindung nach einem Anwählen über die Anzeige- und Eingabevorrichtung 10 erstellbar ist. Ferner ist über die dritte Antenne 11 eine Verbindung zu einem Datennetz, z.B. zum Internet, erstellbar, wobei abgerufene Informationen in der Anzeige- und Eingabevorrichtung 10 darstellbar und mittels dieser auswählbar sind.

In der Figur 2 ist die Anzeige- und Eingabevorrichtung 10 im Detail in einer Aufsicht dargestellt. Die Anzeige- und Eingabevorrichtung 10 umfasst eine Frontfläche mit einer Anzeigefläche 20, die von einem Rahmen 21 begrenzt wird. In der Anzeigefläche ist ein Auswahlmenü 22 dargestellt. Über die Anzeigefläche 20 führt ein Steg 24, der ein Hauptfeld 39 der Anzeigefläche an einer Seite begrenzt. Die Anzeigefläche 20 selbst dehnt sich in einem gestrichelten Bereich 25 über den Steg 24 hinaus aus, wobei der Steg 24 sich in dem Bereich 25 über die Anzeigefläche 20 erstreckt und einen Rahmen für Öffnungen 31, 32, 33, 34 und 35, die in den Bereich des Stegs 24 eingebracht sind. Durch die Öffnungen ist die Anzeigefläche 20 in den Bereichen der Öffnungen einer direkten Berührung zugänglich. In der ersten Öffnung 31 ist ein erstes Symbol 41 dargestellt, wobei das erste Symbol in dem hier gewählten Ausführungsbeispiel einen Rundfunksender symbolisiert. Die Anzeigefläche 20 ist berührungsempfindlich ausgeführt, so dass eine Berührung der Anzeigefläche 20 in dem Bereich der ersten Öffnung 31 von einer Auswerteeinheit registriert und an die Recheneinheit 3 der Zentraleinheit 2 weitergeleitet wird. Die Recheneinheit 3 schaltet daraufhin eine Ausgabe der Fahrerinformationsvorrichtung 1 auf eine Rundfunkausgabe um. Vorzugsweise wird hierzu in der Anzeigefläche 20 z.B. das Auswahlmenü 22 mit einer Vielzahl einzelner Auswahlfelder 26 dargestellt. Die Auswahlfelder 26 tragen in dem gewählten Ausführungsbeispiel die Bezeichnungen S1, S2, S3, S4 und S5, wobei die Bezeichnungen S1, S2, S3, S4 und S5 jeweils für einen auswählbaren Radiosender stehen. In einem ersten Ausführungsbeispiel kann durch eine Berührung der Anzeigefläche 20 im Bereich der zugehörigen Auswahlfelder 26 durch eine Berührung des jeweiligen Auswahlfeldes ein gewünschter Sender ausgewählt werden. In einem weiteren Ausführungsbeispiel können an einem Rand der Anzeigefläche mechanische Bedienelemente 27, z.B. Drucktasten, angeordnet sein, die einem jeweiligen Auswahlfeld 26 zugeordnet sind. In einem bevorzugten Ausführungsbeispiel wird die Beschriftung der Öffnungen 31, 32, 33, 34, 35 geändert und statt der in der Figur 2 gezeigten Symbole wird der Name oder ein Symbol eines Auswahlfeldes in dem jeweiligen Tastenbereich angezeigt, so dass das Auswahlfeld über eine Berührung der Anzeigefläche in dem jeweiligen Tastenbereich ausgewählt werden kann.

In der vierten Öffnung 34 ist ein viertes Symbol 44 dargestellt, das als ein Telefon ausgeführt ist. Durch den Steg 24 getrennt, ist in der Anzeigefläche, benachbart zu der vierten Öffnung 34, ein weiteres Symbol 28 dargestellt, z.B. ein Warnsymbol. Bezüglich einer Telefonfunktion der Fahrerinformationsvorrichtung 1 kann durch das zusätzliche Symbol z.B. optisch auf einen eingehenden Anruf oder auf einen fehlenden Kontakt zu dem Mobilfunktelefonnetz 12 hingewiesen werden. Ferner kann neben der Darstellung eines weiteren Symbols benachbart zu einer der Öffnungen eine weitere Erläuterung einer über eine Berührung der Anzeigefläche 20 in einem Bereich der Öffnungen 31-35 durchführbaren Funktionen erfolgen. So können z.B. die Sendernamen der in der Figur 2 mit S1-S5 abgekürzten Sender benachbart zu den Öffnungen 31-35 dargestellt werden, während z.B. nur die Nummern in den jeweiligen Öffnungen in der Anzeigefläche 20 dargestellt werden.

In der zweiten Öffnung 32 ist ein zweites Symbol 42 dargestellt, in dem ein Datenträger gezeigt ist. Durch eine Berührung wird auf die Musikwiedergabe eines in das Datenträgerlaufwerk 8 eingelegten Datenträgers umgeschaltet. Ferner können Daten auch auf einer Festplatte oder auf einem Laufwerk abgelegt sein, dass extern z.B. im Kofferraum des Fahrzeugs angeordnet ist. In der dritten Öffnung 33 ist ein drittes Symbol 43 als eine Straße dargestellt, mit der ein Bedienmenü für eine Fahrzeugnavigation aufrufbar ist. In der fünften Öffnung 35 ist als ein fünftes Symbol 45 die Bezeichnung "off" dargestellt, mit der die Fahrerinformationsvorrichtung 1 abgeschaltet werden kann.

In einem bevorzugten Ausführungsbeispiel ist an oder in einer Umgebung der Anzeige- und Eingabevorrichtung ein Helligkeitssensor 29 angeordnet, mit dem eine Umgebungshelligkeit der Anzeige- und Eingabevorrichtung ermittelbar ist. In Abhängigkeit von der von dem Helligkeitssensor 29 ermittelten Helligkeit kann die Anzeige in der Anzeigefläche und in den Öffnungen 31-35 verschiedenfarbig und/oder in verschiedener Helligkeit erfolgen, so dass ein Fahrer nicht geblendet wird. Insbesondere ist z.B. ein Nachtdesign möglich, bei dem eine Darstellung in heller Schrift vor einem dunklen Hintergrund erfolgt, während bei einem Tagdesign die Farben invers dargestellt werden.

Zwischen den Öffnungen 31-35 sind an den Rahmen 21 in dem Bereich 25 Erhöhungen 50 angeformt, die für einen Benutzer eine gut fühlbare Trennung zwischen den verschiedenen Öffnungen verbessern. Der Rahmen 21 ist hierbei vorzugsweise aus einem Kunststoffmaterial ausgeführt, aus dem die Erhöhungen 50 ausgeformt sind.

In der Figur 3 ist ein Schnitt durch die Anzeige- und Eingabevorrichtung 10 entlang der Linie III in der Figur 2 dargestellt. Die Anzeigefläche 20 wird von einer Flüssigkristallzelle 51 gebildet, bei der zwischen einer ersten Glasplatte 52 und einer zweiten Glasplatte 53 eine Flüssigkristallschicht 54 eingeschlossen ist. Das von einer Lichtquelle 55 erzeugte Licht wird von einem Lichtleiter 56 in Richtung der Flüssigkristallzelle 51 ausgekoppelt. Die Flüssigkristallzelle 51 ist über in der Figur 3 nicht gezeigte Steuereinheiten elektrisch ansteuerbar, wobei durch auf den Glasplatten 52, 53 angeordnete Elektroden der zwischen den Glasplatten 52, 53 befindliche Flüssigkristall in seiner optischen Eigenschaft verändert wird. Infolge dessen wird das von der Lichtquelle 55 erzeugte Licht von einem in der Figur 3 ebenfalls nicht gezeigten Polarisator entweder absorbiert oder zumindest teilweise durchgelassen. Auf der zweiten Glasplatte 53, die einem Betrachter der Anzeigefläche 20 zuweist, ist eine berührungsempfindliche Schicht 57 angeordnet. In einem Ausführungsbeispiel wird die berührungsempfindliche Schicht 57 von Halbleiterbahnen gebildet, die nach Zeilen und Spalten bezüglich der Anzeigefläche 20 gegliedert sind. Bei einem Druck auf die berührungsempfindliche Schicht ändert sich an mindestens einer Zeilen- und Spaltenkoordinate ein elektrischer Widerstand, wobei diese Widerstandsänderung von einer Auswerteeinheit 58 erfasst wird. Wird eine Widerstandsänderung in einem Bereich des Steges 24, bzw. in dem Bereich 25 außerhalb der Öffnungen 31-35 erfasst, so wird dies von der Auswerteeinheit 58 ignoriert. Die Abtrennung zwischen den Öffnungen sollte dabei möglichst dünn ausgeführt werden, damit keine zu große Trichterwirkung für die zu berührende Stelle der Anzeigefläche 20 zustandekommt. Eine erfasste Eingabe wird von der Auswerteeinheit 58 an die Zentraleinheit 2 und damit an die Recheneinheit 3 weitergegeben. Die berührungsempfindliche Schicht kann auf verschiedene Weise ausgeführt werden. Z.B. kann eine Berührungserfassung auf einem kapazitiven Messprinzip beruhen. Die Flüssigkristallzelle 51 wird durch den Rahmen 21 in der Anzeige- und Eingabevorrichtung 10 gehalten. In der Figur 3 ist die Position einer Erhöhung 50 gestrichelt eingezeichnet.

In den Bereichen der Öffnungen 31-35 sind vorzugsweise den einzelnen Öffnungen zugeordnete Lichtquellen 59 angeordnet, durch die geradlinig Licht durch den Lichtleiter 56 hindurch zu der jeweiligen Öffnung ausgekoppelt werden kann. Hierdurch ist möglich, z.B. in Warnsituationen, durch eine Warnfarbe der Anzeigefläche und/oder ein Blinken der Lichtquelle 59 im Bereich der jeweiligen Öffnung einen Benutzer besonders auf eine Warnung hinzuweisen.

Der Rahmen 21 ist vorzugsweise auswechselbar angeordnet, so dass für andere Varianten der Anzeige- und Eingabevorrichtung mit gegebenenfalls weiteren Öffnungen durch einen Austausch des Rahmens 21 die Anzeige- und Eingabevorrichtung 10 auch für eine modifizierte Fahrerinformationsvorrichtung mit anderen Ansteuerungsprogrammen verwendet werden kann. In einem weiteren, in der Zeichnung nicht dargestellten Ausführungsbeispiel kann der Steg 24 unmittelbar auf die Anzeigefläche 20 aufgeklebt oder aufgedruckt werden. In diesem Fall ist keine Anpassung des Gehäuses bzw. eines Gehäuserahmens an eine entsprechende Anzeige- und Eingabevorrichtung erforderlich, da die diese bereits eine Trennung von Anzeigebereichen durch auf die Anzeigefläche aufgebrachte Stege aufweist.

## Patentansprüche

1. Anzeige- und Eingabevorrichtung, wobei eine Anzeigefläche der Anzeigevorrichtung zumindest teilweise berührungsempfindlich ist, wobei ein erster Bereich und ein zweiter Bereich der Anzeigefläche voneinander getrennt sind, **dadurch gekennzeichnet, dass** auf der Anzeigefläche (20, 31, 32, 33, 34, 35) ein Steg (24) angeordnet ist und dass der erste und der zweite Bereich (31, 32, 33, 34, 35) durch den Steg (24) getrennt sind.

2. Anzeige- und Eingabevorrichtung nach Anspruch 1, **dadurch gekennzeichnet, dass** mit einer Berührung der Anzeigefläche in dem ersten Bereich eine erste Eingabe erfassbar ist und dass mit einer Berührung der Anzeigefläche in dem zweiten Bereich eine zweite Eingabe erfassbar ist.

3. Anzeige- und Eingabevorrichtung nach einem der vorhergehenden Ansprüche, **dadurch gekennzeichnet, dass** durch den Steg (24) Tastenfelder (31, 32, 33, 34, 35) auf der Anzeigefläche abgeteilt sind.

4. Anzeige- und Eingabevorrichtung nach Anspruch 3, **dadurch gekennzeichnet, dass** Lichtquellen (59) zur Beleuchtung einzelner Tastenfelder (31, 32, 33, 34, 35) an der Anzeigefläche angeordnet sind.

5. Anzeige- und Eingabevorrichtung nach einem der vorhergehenden Ansprüche, **dadurch gekennzeichnet, dass** eine Funktion (41, 42, 43, 44, 45), die mit einer Berührung der Anzeigefläche in einem Bereich der Anzeigefläche aufrufbar ist, in dem zugehörigen Bereich der Anzeigefläche angezeigt ist.

6. Anzeige- und Eingabevorrichtung nach einem der vorhergehenden Ansprüche, dass die Anzeigefläche in dem Bereich des auf der Anzeigefläche angeordneten Steges (24) unempfindlich gegenüber einer Berührung ist.

7. Anzeige- und Eingabevorrichtung nach einem der vorhergehenden Ansprüche, **dadurch gekennzeichnet, dass** der Steg (24) an ein Gehäuse (21) der Anzeige- und Eingabevorrichtung (10) angeformt ist.

8. Anzeige- und Eingabevorrichtung nach einem der vorhergehenden Ansprüche, **dadurch gekennzeichnet, dass** eine Abdeckung (21) der Anzeigefläche mit daran angeordneten Stegen (24) auswechselbar an der Anzeigefläche (20, 31, 32, 33, 34, 35) angeordnet ist.

9. Anzeige- und Eingabevorrichtung nach einem der vorhergehenden Ansprüche, **dadurch gekennzeichnet, dass** der Steg (24) auf die Anzeigefläche aufgedruckt oder aufgeklebt ist.

10. Anzeige- und Eingabevorrichtung nach einem der vorhergehenden Ansprüche, **dadurch gekennzeichnet, dass** die Anzeige als eine Flüssigkristallanzeige (51) ausgeführt ist und dass zwischen dem Steg (24) und der Flüssigkristallanzeige (51) eine berührungsempfindliche Schicht (57) angeordnet ist.

11. Verwendung einer Anzeige- und Eingabevorrichtung nach einem der vorhergehenden Ansprüche zur Bedienung einer Fahrerinformationsvorrichtung in einem Kraftfahrzeug.
